(19) **Europäisches Patentamt / European Patent Office / Office européen des brevets**

(11) **EP 4 645 348 A1**

(12) # EUROPEAN PATENT APPLICATION
published in accordance with Art. 153(4) EPC

(43) Date of publication:
05.11.2025 Bulletin 2025/45

(21) Application number: 23912046.2

(22) Date of filing: 25.12.2023

(51) International Patent Classification (IPC):
*H01B 13/00* (2006.01)    *C01B 25/14* (2006.01)
*C01D 15/04* (2006.01)    *H01M 10/0562* (2010.01)

(52) Cooperative Patent Classification (CPC):
**C01B 25/14; C01D 15/04; H01B 13/00;
H01M 10/0562;** Y02E 60/10

(86) International application number:
**PCT/JP2023/046403**

(87) International publication number:
**WO 2024/143266 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.12.2022 JP 2022212574

(71) Applicant: **AGC INC.**
**Chiyoda-ku,**
**Tokyo 1008405 (JP)**

(72) Inventor: **ANDO, Ryota**
**Tokyo 100-8405 (JP)**

(74) Representative: **Müller-Boré & Partner**
**Patentanwälte PartG mbB**
**Friedenheimer Brücke 21**
**80639 München (DE)**

(54) **COMPOSITE POWDER TO BE USED IN SOURCE MATERIAL FOR SULFIDE SOLID ELECTROLYTE, METHOD FOR MANUFACTURING SAME, AND METHOD FOR MANUFACTURING SULFIDE SOLID ELECTROLYTE**

(57) The present invention relates to a method for manufacturing a composite powder that is to be used in a source material for a sulfide solid electrolyte, said method including heating an aqueous solution of a lithium halide to a temperature that is greater than or equal to the boiling point in the presence of elemental sulfur, and removing the solvent, and said composite powder including the lithium halide and the elemental sulfur.

*FIG. 1*

EP 4 645 348 A1

## Description

TECHNICAL FIELD

The present invention relates to a composite powder to be used in a raw material for a sulfide solid electrolyte and a method for producing the same. Further, the present invention also relates to a method for producing a sulfide solid electrolyte using the composite powder obtained above.

BACKGROUND ART

Lithium-ion secondary batteries are widely used in portable electronic devices such as mobile phones and laptop computers.

In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

An example of the solid electrolyte used in the all-solid-state lithium-ion secondary battery includes a sulfide solid electrolyte. Examples of a raw material for the sulfide solid electrolyte include a lithium halide and elemental sulfur.

Among the above raw materials, the lithium halide is generally known to be synthesized by a reaction between lithium carbonate and hydrohalic acid. The lithium halide is likely to contain moisture due to high deliquescency thereof, but it is desirable for the lithium halide to be free of moisture from the viewpoint of preventing a decrease in lithium ion conductivity of the sulfide solid electrolyte.

In order to dry the lithium halide, which has the high deliquescency, and obtain a powder that is free of moisture, excessive temperature and time are required to be applied to the drying.

Therefore, Patent Literature 1 discloses that for lithium iodide, which is a lithium halide, solid lithium iodide hydrate is mixed with an organic solvent, followed by azeotropy and drying, thereby producing anhydrous lithium iodide from which moisture has been removed.

Patent Literatures 2 and 3 disclose that moisture can be removed from lithium iodide, which is a lithium halide, by heating a lithium iodide aqueous solution under reduced pressure while stirring the lithium iodide aqueous solution.

Among the above raw materials, elemental sulfur is also a general raw material as a raw material for the sulfide solid electrolyte. For example, Patent Literature 4 discloses a method in which elemental sulfur is used as a powder raw material.

CITATION LIST

PATENT LITERATURE

Patent Literature 1: JP2013-256416A
Patent Literature 2: JP2014-065637A
Patent Literature 3: JP2014-065638A
Patent Literature 4: JP2020-027715A

SUMMARY OF INVENTION

TECHNICAL PROBLEM

However, when the lithium halide aqueous solution is heated at a temperature equal to or higher than a boiling point of the lithium halide aqueous solution in order to remove moisture from the lithium halide aqueous solution and dry the lithium halide aqueous solution, bumping tends to occur. A liquid that bubbles up due to the bumping is in a superheated state, and when this liquid comes into contact with piping of a production apparatus or a wall surface of the apparatus and is cooled, the liquid suddenly becomes supercooled, causing the lithium halide to rapidly crystallize. As a result, problems such as blockage of the piping, deterioration of accuracy of instruments caused by adhesion of crystals to an inside of the apparatus, and obstruction of opening and closing of a raw material inlet/outlet occur. Therefore, continuous operation of the apparatus is difficult, and the inside of the apparatus is required to be cleaned periodically.

On the other hand, in order to prevent the bumping, a method for lowering a heating rate or removing the moisture at a low temperature when drying the lithium halide aqueous solution can be considered. However, this method requires a very long time to sufficiently remove the moisture, resulting in a decrease in productivity.

Therefore, an object of the present invention is to provide a method for producing a composite powder containing a lithium halide which is to be used as a raw material for a sulfide solid electrolyte, which prevents bumping and has excellent productivity. Another object thereof is to provide a new composite powder that is to be used as a raw material for a sulfide solid electrolyte, and to provide a new method for producing a sulfide solid electrolyte using the composite powder.

SOLUTION TO PROBLEM

The present inventors have found that by heating a lithium halide aqueous solution in the presence of elemental sulfur, bumping does not occur even when the solution is heated at a high temperature, thereby solving the above problems, and have completed the present invention.

That is, the present invention relates to the following [1] to [11].

[1] A method for producing a composite powder containing a lithium halide and elemental sulfur which is to be used in a raw material for a sulfide solid electrolyte, the method including:
heating a lithium halide aqueous solution at a temperature equal to or higher than a boiling point in the presence of elemental sulfur, and removing a solvent.
[2] The method for producing a composite powder according to [1], in which an elemental sulfur powder is added to the lithium halide aqueous solution to create a state in which elemental sulfur is present.
[3] The method for producing a composite powder according to [1], in which the lithium halide aqueous solution is a lithium halide aqueous solution containing $SO_3^{2-}$, and
an alkali metal sulfide is added to the lithium halide aqueous solution to create a state in which elemental sulfur is present.
[4] The method for producing a composite powder according to [1], in which the lithium halide aqueous solution is a lithium halide aqueous solution containing $SO_3^{2-}$, and
hydrogen sulfide is introduced to the lithium halide aqueous solution to create a state in which elemental sulfur is present.
[5] The method for producing a composite powder according to [3] or [4], the method including:
obtaining the lithium halide aqueous solution containing $SO_3^{2-}$ from at least one of lithium carbonate and lithium hydroxide, in which the at least one of lithium carbonate and lithium hydroxide contains $SO_3^{2-}$.
[6] The method for producing a composite powder according to any one of [2] to [4], in which the lithium halide aqueous solution includes an aqueous solution of lithium bromide.
[7] A method for producing a sulfide solid electrolyte, the method including:

   mixing a raw material containing a Li element, a raw material containing a P element, and a raw material containing an S element to obtain a raw material mixture;
   heating the raw material mixture to obtain a melt; and
   cooling the melt to precipitate a crystal,
   in which the composite powder obtained by the production method according to any one of [1] to [6] is used at least as the raw material containing the Li element.

[8] A method for producing a sulfide solid electrolyte, the method including:

   mixing a raw material containing a Li element, a raw material containing a P element, and a raw material containing an S element to obtain a raw material mixture; and
   heating the raw material mixture to obtain a sintered body,
   in which the composite powder obtained by the production method according to any one of claims [1] to [6] is used at least as the raw material containing the Li element.

[9] A composite powder containing a lithium halide and elemental sulfur which is to be used as a raw material for a sulfide solid electrolyte.

The composite powder according to [9], in which a variation of elemental sulfur in the composite powder is 15% or less.
The composite powder according to [9] or [10], in which the lithium halide includes lithium bromide.

ADVANTAGEOUS EFFECTS OF INVENTION

According to a production method of the present invention, bumping of a lithium halide aqueous solution can be prevented even when heated at a high temperature equal to or higher than a boiling point. Therefore, an inside of a production apparatus is prevented from being contaminated while a lithium halide is dried at a high temperature, and productivity is also excellent. Since a composite powder according to the present invention contains the lithium halide and elemental sulfur, the composite powder is also very useful as a raw material for a sulfide solid electrolyte.

In addition to the above, elemental sulfur as the raw material also poses issues when handled as a powder.

Specifically, elemental sulfur is a combustible powder, and there is a risk of a dust explosion when elemental sulfur is charged. For this reason, when elemental sulfur is charged, measures are taken to prevent generation of dust clouds, such as by limiting a charging amount or using sulfur having a coarse particle size. In particular, an environment in which a sulfide solid electrolyte raw material is used is generally a dry environment such as a dry room, and since there is a high possibility of ignition caused by generation of static electricity, greater caution is required.

However, if the charging amount is reduced, it takes time to charge the raw material, and productivity decreases. In addition, when a material having a coarse particle size is used, homogeneity thereafter deteriorates.

In contrast, it has been found that a dust explosion can be prevented by using, as a raw material, a composite powder containing a lithium halide and elemental sulfur obtained by a production method according to the present invention. Therefore, it is not necessary to take measures such as reducing the charging amount or using sulfur having the coarse particle size, and the production method is very useful from the viewpoint of productivity and homogeneity.

BRIEF DESCRIPTION OF DRAWINGS

FIG. 1 is a flow chart illustrating a method for producing a composite powder according to the present embodiment.
FIG. 2 is a flow chart showing an aspect of the method for producing a composite powder according to the present embodiment.
FIG. 3 is a flow chart showing an aspect of the method for producing a composite powder according to the present embodiment.
FIG. 4 is a flow chart showing an aspect of the method for producing a composite powder according to the present embodiment.
FIG. 5 is a flow chart showing an aspect of a method for producing a raw material in the composite powder according to the present embodiment.
FIG. 6 is a flow chart showing an aspect of a method for producing a sulfide solid electrolyte according to the present embodiment.
FIG. 7 is a flow chart showing an aspect of the method for producing a sulfide solid electrolyte according to the present embodiment.

DESCRIPTION OF EMBODIMENTS

Hereinafter, the present invention is described in detail, but the present invention is not limited to the following embodiment, and can be freely modified and implemented without departing from the gist of the present invention. In addition, "to" indicating a numerical range is used to include numerical values written before and after it as a lower limit value and an upper limit value.

[Composite Powder and Production Method Thereof]

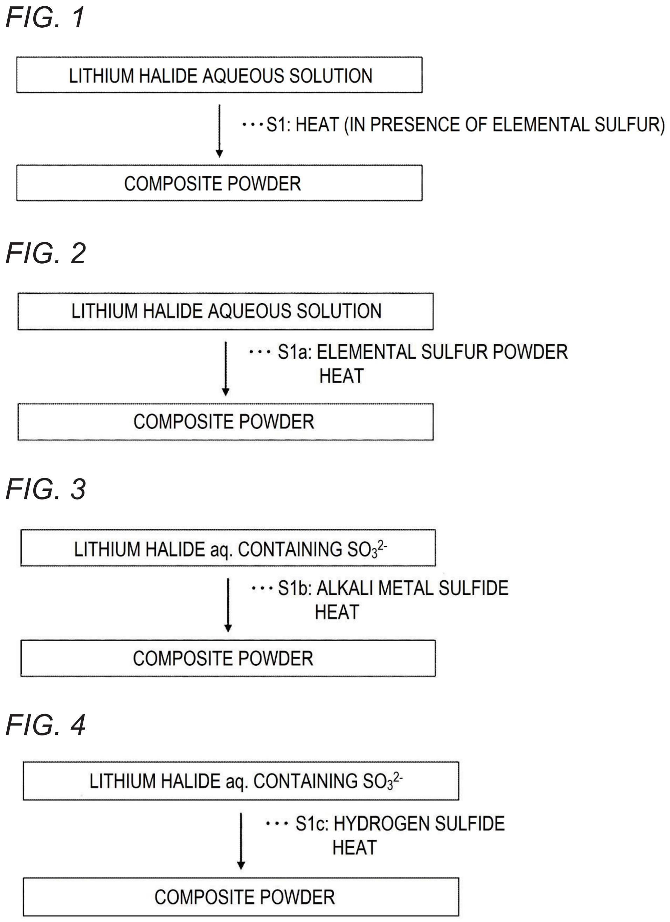

As shown in FIG. 1, a method for producing a composite powder according to the present embodiment includes, as step S1, a step of heating a lithium halide aqueous solution at a temperature equal to or higher than a boiling point in the presence of elemental sulfur to remove a solvent.

Accordingly, a composite powder containing the lithium halide and elemental sulfur is obtained.

Unlike a simple mixture of a single powder of the lithium halide and a single powder of elemental sulfur, the composite powder containing the lithium halide and elemental sulfur is a powder in which both the powders are homogeneously dispersed. More specifically, the composite powder is a powder in which elemental sulfur is contained as a domain in the lithium halide.

To determine whether a powder is the composite powder, five samples of 0.1 g are taken from the composite powder and an S element is measured by a high-frequency furnace combustion-infrared absorbing method, and sulfur in the composite powder is quantified. If a variation in a quantified value for each of the five samples is 15% or less, it can be said to be the composite powder, and thus the powder can be clearly distinguished from the simple mixture.

When the lithium halide aqueous solution is heated at a temperature equal to or higher than a boiling point of the lithium halide aqueous solution in order to remove moisture from the lithium halide aqueous solution and dry the lithium halide aqueous solution, bumping tends to occur. However, in the production method according to the present embodiment, by performing the heating in the presence of elemental sulfur, the lithium halide aqueous solution boils in the presence of the elemental sulfur powder, and the moisture is removed. The presence of the elemental sulfur powder acts as a nucleus for bubble formation, preventing bumping of the lithium halide aqueous solution.

In addition to the above, when the composite powder obtained by the production method according to the present embodiment is used as a raw material of the sulfide solid electrolyte, a dust explosion of elemental sulfur can be prevented, and thus the sulfide solid electrolyte can be produced without reducing productivity and homogeneity.

As a method of achieving a presence state of elemental sulfur in step S1, for example, as shown in FIG. 2, a method for adding the elemental sulfur powder to the lithium halide aqueous solution is shown as step S1a. In addition, as shown in FIG. 3, as step S1b, a method for adding an alkali metal sulfide to a lithium halide aqueous solution containing sulfite ions ($SO_3^{2-}$) is shown. Further, as shown in FIG. 4, as step S1c, a method for introducing hydrogen sulfide into the lithium halide aqueous solution containing sulfite ions is shown.

In step S1a, the elemental sulfur powder is added to the lithium halide aqueous solution, elemental sulfur is preferably dispersed in the aqueous solution, and the aqueous solution is heated at the temperature equal to or higher than the boiling point of the lithium halide aqueous solution to remove the solvent. In this case, since the elemental sulfur powder itself is added, an occurrence of the bumping of the lithium halide aqueous solution is prevented by the added elemental sulfur powder.

The elemental sulfur powder may be added before or during the heating for removing the solvent of the lithium halide aqueous solution. When a dispersion treatment is further performed after the addition of elemental sulfur, the addition before heating the lithium halide aqueous solution is preferable from the viewpoint of workability.

Examples of elemental sulfur having good dispersibility include colloidal sulfur and precipitated sulfur.

Sulfur may be dispersed in the lithium halide aqueous solution by adding elemental sulfur and then dispersing elemental sulfur with an ultrasonic homogenizer, adding a dispersant, or pulverizing elemental sulfur with a wet-type jet mill.

An addition amount of the elemental sulfur powder is preferably 0.01 parts by mass to 5 parts by mass, more preferably 0.05 parts by mass to 3 parts by mass, and still more preferably 0.1 parts by mass to 1 parts by mass with respect to 100 parts by mass of the lithium halide contained in the lithium halide aqueous solution. Here, from the viewpoint of exhibiting an effect of adding elemental sulfur, the addition amount of the elemental sulfur powder is preferably 0.01 parts by mass or more, more preferably 0.05 parts by mass or more, and still more preferably 0.1 parts by mass or more. On the other hand, from the viewpoint of preventing a decrease in dispersibility and an occurrence of aggregation, the addition amount of the elemental sulfur powder is preferably 5 parts by mass or less, more preferably 3 parts by mass or less, and still more preferably 1 part by mass or less.

An average particle diameter of the elemental sulfur powder is not particularly limited, and is, for example, preferably 0.1 $\mu$m to 10 $\mu$m, more preferably 0.5 $\mu$m to 6 $\mu$m, and still more preferably 1 $\mu$m to 3 $\mu$m. Here, from the viewpoint of easy availability, the average particle diameter of elemental sulfur is preferably 0.1 $\mu$m or more, more preferably 0.5 $\mu$m or more, and still more preferably 1 $\mu$m or more. On the other hand, from the viewpoint of maintaining the dispersibility, the average particle diameter of elemental sulfur is preferably 10 $\mu$m or less, more preferably 6 $\mu$m or less, and still more preferably 3 $\mu$m or less.

In the present description, the average particle diameter refers to a median diameter (D50) determined from a volume-based particle size distribution chart obtained by measuring a particle size distribution using a particle size distribution meter using a laser diffraction method, which means a particle diameter at which 50 vol% of particles has a particle diameter equal to or less than the value.

The added elemental sulfur powder is preferably present in a dispersed state in the lithium halide aqueous solution. It is considered that in a process of heating the lithium halide aqueous solution containing the elemental sulfur powder and removing the solvent, elemental sulfur is used for nucleation of lithium halide formation, and elemental sulfur is contained as the domain in the lithium halide, whereby a homogeneously dispersed composite powder is obtained.

In step S1b, the alkali metal sulfide is added to the lithium halide aqueous solution containing $SO_3^{2-}$ to create a state in which elemental sulfur is present.

When the alkali metal sulfide is added to the lithium halide aqueous solution containing $SO_3^{2-}$, the lithium halide aqueous solution becomes cloudy. Taking a case in which $H_2SO_3$ is contained as $SO_3^{2-}$ in the lithium halide aqueous solution as an example, the above reaction is represented by $H_2SO_3 + 2R_2S + H_2O \rightarrow 3S$ (elemental sulfur) $+ 4ROH$, and cloudiness indicates that elemental sulfur is precipitated. Here, R means an alkali metal element, and $R_2S$ means the alkali metal sulfide. Accordingly, the state in which elemental sulfur is present is created.

The alkali metal sulfide may be added before or during heating for removing a solvent of the lithium halide aqueous solution containing $SO_3^{2-}$. From the viewpoint of preventing $SO_3^{2-}$ from volatilizing as a $SO_2$ gas and reducing a content thereof, the addition of the alkali metal sulfide is preferably performed before heating the lithium halide aqueous solution containing $SO_3^{2-}$.

When the heating is continued to remove the solvent of the lithium halide aqueous solution in a state in which elemental sulfur is precipitated, a composite powder in which the elemental sulfur powder is included as the domain in the lithium halide powder is obtained.

The alkali metal sulfide is not particularly limited as long as the alkali metal sulfide is a sulfide of the alkali metal element. Examples thereof include lithium sulfide, sodium sulfide, potassium sulfide, rubidium sulfide, cesium sulfide, and these may be used alone or in combination of two or more kinds thereof. Among them, lithium sulfide and sodium sulfide are preferable, and lithium sulfide is more preferable, from the viewpoint of easy availability and less influence of an element to be introduced on an electrolyte.

An addition amount of the alkali metal sulfide is preferably 0.5 mol to 10 mol, more preferably 1 mol to 5 mol, and still more preferably 2 mol to 3 mol with respect to 1 mol of sulfite ions ($SO_3^{2-}$) contained in the lithium halide aqueous solution. Here, the addition amount of the alkali metal sulfide is preferably 0.5 mol or more, more preferably 1 mol or more, and still more preferably 2 mol or more from the viewpoint of reacting and effectively utilizing most of the contained sulfite ions. On the other hand, from the viewpoint of avoiding adding an excessive amount that is not used in the reaction, the addition amount of the alkali metal sulfide is preferably 10 mol or less, more preferably 5 mol or less, and still more preferably 3 mol or less.

A concentration of $SO_3^{2-}$ contained in the lithium halide aqueous solution is preferably 0.0001 mol to 0.05 mol, more preferably 0.0002 mol to 0.02 mol, and still more preferably 0.0005 mol to 0.01 mol with respect to 1 mol of lithium halide contained in the lithium halide aqueous solution. Here, from the viewpoint of generating an existing amount of elemental sulfur suitable for expressing the effect of the present embodiment, the concentration of $SO_3^{2-}$ is preferably 0.0001 mol or more, more preferably 0.0002 mol or more, and still more preferably 0.0005 mol or more. On the other hand, from the viewpoint of preventing excessive $SO_3^{2-}$ from becoming the $SO_2$ gas during drying, the concentration of $SO_3^{2-}$ is preferably 0.05 mol or less, more preferably 0.02 mol or less, and still more preferably 0.01 mol or less.

In step S1c, hydrogen sulfide is introduced into the lithium halide aqueous solution containing $SO_3^{2-}$ to create a state in which elemental sulfur is present.

When hydrogen sulfide is introduced into the lithium halide aqueous solution containing $SO_3^{2-}$, the lithium halide aqueous solution becomes cloudy. Taking a case in which $H_2SO_3$ is contained as $SO_3^{2-}$ as an example, the above reaction is represented by $H_2SO_3 + 2H_2S \rightarrow 3S$ (elemental sulfur) $+ 3H_2O$, and cloudiness indicates that elemental sulfur is precipitated. Accordingly, the state in which elemental sulfur is present is created.

Methods for introducing hydrogen sulfide include bubbling a gas containing hydrogen sulfide, and adding an aqueous solution containing hydrogen sulfide. Among these, it is preferable to bubble a gas containing hydrogen sulfide into an aqueous solution containing the obtained composite powder from the viewpoint of not increasing an amount of solvent to be removed by the drying.

The gas containing hydrogen sulfide may be a gas containing only hydrogen sulfide or a mixed gas containing hydrogen sulfide and another gas. Examples of the other gas include nitrogen and argon. Among them, the gas containing only hydrogen sulfide is preferable from the viewpoint of increasing reaction efficiency of the bubbling.

When the gas containing hydrogen sulfide is introduced into the lithium halide aqueous solution containing $SO_3^{2-}$ by the bubbling, a flow rate of the gas is preferably adjusted so that the momentum of the bubbling does not become too large. The flow rate of the gas is preferably, for example, 0.01 SLM (standard litter min) to 0.5 SLM.

When hydrogen sulfide is introduced by adding an aqueous solution containing hydrogen sulfide, a concentration of hydrogen sulfide in the aqueous solution is preferably 0.04 mol/L to 0.10 mol/L. Here, from the viewpoint of efficiently generating elemental sulfur and from the viewpoint of not increasing the amount of solvent removed by the drying in the aqueous solution containing the obtained composite powder, the concentration of hydrogen sulfide in the aqueous solution is preferably high. The concentration of hydrogen sulfide is preferably 0.04 mol/L or more, more preferably 0.06 mol/L or more, and still more preferably 0.08 mol/L or more. On the other hand, when hydrogen sulfide is introduced under atmospheric pressure, there is no load on an apparatus, so the concentration of hydrogen sulfide in the aqueous solution is preferably 0.1 mol/L or less, which is a saturated concentration of hydrogen sulfide in water.

Hydrogen sulfide may be introduced before the heating for removing the solvent of the lithium halide aqueous solution containing $SO_3^{2-}$, or may be introduced during the heating. From the viewpoint of preventing $SO_3^{2-}$ from volatilizing as a $SO_2$ gas and reducing a content thereof, the introduction of hydrogen sulfide is preferably performed before heating the lithium halide aqueous solution containing $SO_3^{2-}$.

Examples of the lithium halide in step S1 include lithium fluoride, lithium chloride, lithium bromide, and lithium iodide, and these may be used alone or in combination of two or more kinds thereof. Among these, from the viewpoint of increasing the lithium ion conductivity of the sulfide solid electrolyte obtained when the obtained composite powder is used as the raw material, lithium chloride and lithium bromide are preferable, and lithium bromide is more preferable.

A concentration of the lithium halide in the lithium halide aqueous solution is not particularly limited, and is, for example, preferably 10% by mass to 40% by mass, more preferably 15% by mass to 35% by mass, and still more preferably 20% by mass to 30% by mass. Here, from the viewpoint of not increasing the amount of the solvent removed by the drying in the aqueous solution containing the obtained composite powder, the concentration of the lithium halide is preferably 10% by mass or more, more preferably 15% by mass or more, and still more preferably 20% by mass or more. On the other hand, from the viewpoint of preventing an occurrence of undissolved residues, the concentration of the lithium halide is preferably 40% by mass or less, more preferably 35% by mass or less, and still more preferably 30% by mass or less. When two or more kinds of lithium halides are used, a total concentration thereof is preferably within the above range.

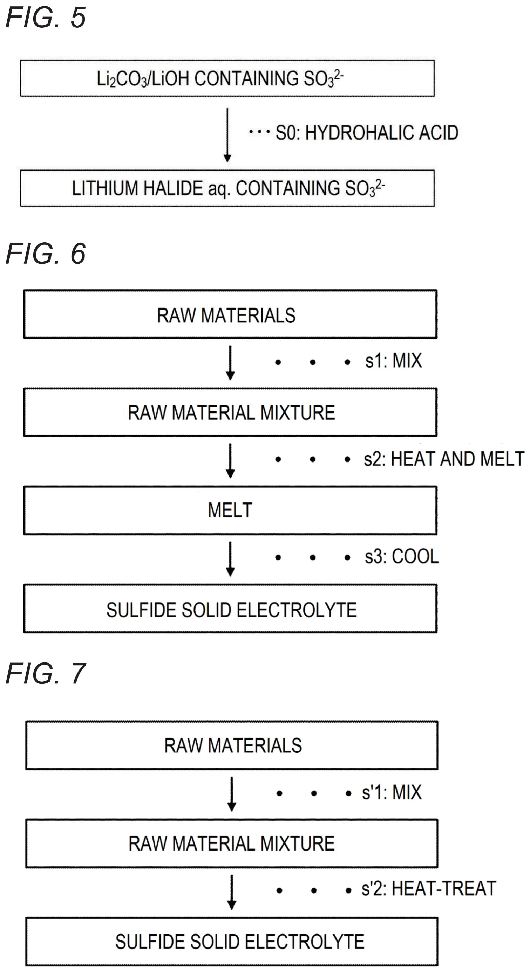

When the lithium halide aqueous solution contains $SO_3^{2-}$ as in step S1b and step S1c, the production method according to the present embodiment preferably further includes a step of obtaining a lithium halide aqueous solution containing $SO_3^{2-}$ from at least one of lithium carbonate and lithium hydroxide as step S0 as shown in FIG. 5.

The at least one of lithium carbonate and lithium hydroxide contains $SO_3^{2-}$. The at least one of lithium carbonate and lithium hydroxide containing $SO_3^{2-}$ is reacted with, for example, hydrohalic acid to obtain the lithium halide aqueous solution containing $SO_3^{2-}$.

The hydrohalic acid is an aqueous solution of hydrogen halide such as hydrofluoric acid, hydrochloric acid, hydrogen bromide, or hydrogen iodide. By reacting this hydrohalic acid with, for example, lithium carbonate containing $SO_3^{2-}$, a chemical reaction $Li_2CO_3 + 2HX \rightarrow 2LiX + H_2CO_3$ occurs, and the lithium halide aqueous solution is obtained. $SO_3^{2-}$ contained in lithium carbonate is contained as it is in the obtained lithium halide aqueous solution. However, when pH is biased to an acidic side, $SO_3^{2-}$ is likely to disperse as a $SO_2$ gas, so it is preferable to keep the pH at 7 or higher.

The same applies to a case where lithium hydroxide containing $SO_3^{2-}$ is used instead of lithium carbonate containing $SO_3^{2-}$.

After the lithium halide aqueous solution is formed, the lithium halide aqueous solution containing $SO_3^{2-}$ may be obtained by generating $SO_3^{2-}$ by an oxidation-reduction reaction of a sulfur component contained in the aqueous solution. Examples of the sulfur component include S, $SO_4^{2-}$, $HSO_3^-$, $S_2O_3^-$, $SO_2$, $HS^-$, $S^{2-}$, and metal compounds and salts thereof.

Lithium carbonate or lithium hydroxide containing $SO_3^{2-}$ is obtained, for example, by adding an aqueous solution of $H_2SO_3$ (sulfurous acid) to lithium carbonate or lithium hydroxide or by reacting with a $SO_2$ gas (sulfurous acid gas). When lithium carbonate or lithium hydroxide is synthesized from an aqueous solution, lithium carbonate or lithium hydroxide containing $SO_3^{2-}$ may be obtained by generating $SO_3^{2-}$ by an oxidation-reduction reaction of a sulfur component contained in the aqueous solution. Examples of the sulfur component include S, $SO_4^{2-}$, $HSO_3^-$, $S_2O_3^-$, $SO_2$, $HS^-$, $S^{2-}$, and metal compounds and salts thereof.

A concentration of $SO_3^{2-}$ contained in lithium carbonate or lithium hydroxide is preferably 0.0001 mol to 0.05 mol, more preferably 0.0002 mol to 0.02 mol, and still more preferably 0.0005 mol to 0.01 mol with respect to 1 mol of lithium contained in lithium carbonate or lithium hydroxide. Here, from the viewpoint of generating the existing amount of elemental sulfur suitable for expressing the effect of the present embodiment, the concentration of $SO_3^{2-}$ is preferably 0.0001 mol or more, more preferably 0.0002 mol or more, and still more preferably 0.0005 mol or more. On the other hand, from the viewpoint of preventing excessive $SO_3^{2-}$ from becoming the $SO_2$ gas during the drying, the concentration of $SO_3^{2-}$ is preferably 0.05 mol or less, more preferably 0.02 mol or less, and still more preferably 0.01 mol or less.

The lithium halide aqueous solution containing $SO_3^{2-}$ is obtained not only from lithium carbonate or lithium hydroxide containing $SO_3^{2-}$ as described above, but also by adding an aqueous solution of $H_2SO_3$ (sulfurous acid), $Li_2SO_3$, $Na_2SO_3$, or the like directly to the lithium halide aqueous solution.

The heating in step S1 is performed at a temperature equal to or higher than a boiling point of the lithium halide aqueous solution or the lithium halide aqueous solution containing $SO_3^{2-}$ until the solvent is removed. Here, the temperature does not means a temperature of the lithium halide aqueous solution or the lithium halide aqueous solution containing $SO_3^{2-}$ but means a heating temperature in a apparatus used for heating and drying, that is, a set temperature.

The boiling point of the lithium halide aqueous solution is about 100°C under normal pressure because the solvent is water, and the heating temperature is preferably 100°C to 240°C, more preferably 150°C to 240°C, still more preferably 170°C to 220°C, and particularly preferably 190°C to 200°C. Here, since lithium halide has strong deliquescency, it is preferable to take excessive temperature and time for the drying in order to obtain a powder containing no moisture. From the above viewpoint, the heating temperature at normal pressure is more preferably 150°C or higher, still more preferably 170°C or higher, and particularly preferably 190°C or higher.

According to the production method of the present embodiment, since the bumping of the lithium halide aqueous solution can be prevented, even when the drying is performed at such an excessive temperature as described above, it is possible to prevent blockage of apparatus piping, decrease in accuracy of an instrument due to crystal adhesion to an inside of a apparatus, obstruction of opening and closing of a raw material inlet/outlet, and the like. Therefore, the apparatus can be continuously operated, and frequency of cleaning the inside of the apparatus can be reduced.

The heating temperature at normal pressure is preferably 240°C or lower, more preferably 220°C or lower, and still more preferably 200°C or lower from the viewpoint that a apparatus cost increases when heat resistance required for the apparatus increases.

The heating of the lithium halide aqueous solution is preferably performed under a pressure reduction condition because the boiling point of the solvent can be lowered and the solvent can be more effectively removed. A pressure during the heating is preferably 50 kPa or less, more preferably 40 kPa or less, and still more preferably 30 kPa or less. A lower limit of the pressure is not particularly limited, but is usually 1 kPa or more.

When the lithium halide aqueous solution is heated under the pressure reduction condition, a preferred heating temperature varies depending on a degree of reduced pressure. For example, when the heating is performed at 20 kPa, the heating temperature is preferably 120°C to 240°C, more preferably 140°C to 220°C, and still more preferably 160°C to 200°C. Here, the heating temperature is preferably 120°C or higher, more preferably 140°C or higher, and still more preferably 160°C or higher. The heating temperature is preferably 240°C or lower, more preferably 220°C or lower, and still more preferably 200°C or lower from the viewpoint that the apparatus cost increases when the heat resistance required for the apparatus increases.

When the lithium halide aqueous solution is heated under the pressure reduction condition, a preferred heating temperature varies depending on the degree of reduced pressure. For example, when the heating is performed at 2 kPa, the heating temperature is preferably 120°C to 240°C, more preferably 140°C to 220°C, and still more preferably 160°C to 200°C. Here, the heating temperature is preferably 120°C or higher, more preferably 140°C or higher, and still more preferably 160°C or higher. The heating temperature is preferably 240°C or lower, more preferably 220°C or lower, and still more preferably 200°C or lower from the viewpoint that the apparatus cost increases when the heat resistance required for the apparatus increases.

A heating time of the lithium halide aqueous solution varies depending on the concentration of the lithium halide and an amount of the solvent, and is not particularly limited as long as the solvent is removed. For example, the heating time is preferably from 100 hours to 1,000 hours, more preferably from 100 hours to 500 hours, and still more preferably from 100 hours to 200 hours. From the viewpoint of the productivity, the heating time is preferably 1000 hours or less, more preferably 500 hours or less, and still more preferably 200 hours or less. From the viewpoint of completing the drying without shortage, the heating time is preferably 100 hours or more.

The composite powder obtained by removing the solvent can be found by Raman spectroscopy to contain the lithium halide and elemental sulfur.

If desired, an amount of moisture of the composite powder can be measured by karl-fischer.

As described above, the composite powder according to the present embodiment contains the lithium halide and elemental sulfur, and exhibits a state in which the lithium halide powder and the elemental sulfur powder are uniformly dispersed.

A content of elemental sulfur in the composite powder is preferably 0.01% by mass to 5.0% by mass, more preferably 0.02% by mass to 3.0% by mass, and still more preferably 0.05% by mass to 1.0% by mass. Here, from the viewpoint of suitably expressing the effect of preventing the bumping when removing the solvent by drying the lithium halide aqueous solution and also achieving excellent productivity, the content of elemental sulfur is preferably 0.01% by mass or more, more preferably 0.02% by mass or more, and still more preferably 0.05% by mass or more. From the viewpoint of preventing sulfur necessary for preparation from becoming excessive when the obtained composite powder is used as the raw material for the sulfide solid electrolyte, the content of elemental sulfur is preferably 5.0% by mass or less, more preferably 3.0% by mass or less, and still more preferably 1.0% by mass or less .

The content of elemental sulfur can be adjusted by an amount of the elemental sulfur powder added to achieve the presence state of elemental sulfur, a concentration of sulfite ions, a concentration of the alkali metal sulfide, the concentration of hydrogen sulfide, and the like. The content of elemental sulfur in the composite powder is obtained by measuring an S element by the high-frequency furnace combustion-infrared absorbing method.

The homogeneity of the composite powder can be evaluated by a variation of elemental sulfur in the composite powder. The variation is preferably 15% or less, more preferably 12% or less, and still more preferably 10% or less. A lower limit of the variation is not particularly limited, but is usually 5% or more.

The variation of elemental sulfur in the composite powder is measured by taking five samples of 0.1 g from the composite powder, measuring the S element by the high-frequency furnace combustion-infrared absorbing method, and quantifying elemental sulfur in the composite powder.

The contents (% by mass) of elemental sulfur in the composite powder in the five samples determined under the above conditions are defined as A1 to A5. An arithmetic mean value Aave. of A1 to A5 represented by the following formula is obtained.

[Math. 1]

$$Aave. = (A1 + A2 + A3 + A4 + A5) / 5$$

The variation (%) is obtained by the following formula using A1 to A5 and Aave. obtained by the above formula.

[Math. 2]

$$\text{Variation (\%)} = \frac{\{\sqrt{(A1-A_{ave.})^2}+\sqrt{(A2-A_{ave.})^2}+\sqrt{(A3-A_{ave.})^2}+\sqrt{(A4-A_{ave.})^2}+\sqrt{(A5-A_{ave.})^2}\}/5}{A_{ave.}} \times 100$$

The above variation can be reduced by improving a dispersion state of elemental sulfur in the lithium halide aqueous solution. For example, when the elemental sulfur powder is added, the dispersion state can be improved by a method of using a powder having a small particle diameter, a method of pulverizing a powder with a jet mill and reducing the particle diameter, or the like.

The composite powder according to the present embodiment is used as the raw material for the sulfide solid electrolyte.

As the raw material for the sulfide solid electrolyte, in addition to a raw material containing a Li element, a raw material containing a P element, and a raw material containing an S element, a raw material containing other elements is used as necessary, and the composite powder according to the present embodiment is used at least as a raw material containing a Li element among the above.

When elemental sulfur is desired to be used as the raw material containing the S element among the raw materials for the sulfide solid electrolyte, the composite powder according to the present embodiment can be used as a raw material serving as both the raw material containing the Li element and the raw material containing the S element.

When a raw material containing a halogen element is used as the raw material for the sulfide solid electrolyte, the composite powder according to the present embodiment can be used as a raw material serving as the raw material containing the halogen element in addition to the raw material containing the Li element.

When the composite powder according to the present embodiment is used as the raw material containing the Li element and is not used as the raw material containing the S element, the composite powder is heated at a temperature equal to or higher than a boiling point of elemental sulfur to volatilize and remove elemental sulfur. Accordingly, the composite powder can be used as a powder of the lithium halide alone. Elemental sulfur can be volatilized, for example, by heating in a nitrogen atmosphere at 450°C to 900°C for 1 hour to 10 hours.

In addition to the above, elemental sulfur may be volatilized and removed by performing the heating at a temperature equal to or higher than the boiling point of elemental sulfur during or after synthesis of the sulfide solid electrolyte.

[Method for Producing Sulfide Solid Electrolyte]

One aspect of a method for producing a sulfide solid electrolyte according to the present embodiment includes the following steps s1 to s3 in order, as shown in FIG. 6.

Step s1: a step of mixing the raw material containing the Li element, the raw material containing the P element, and the raw material containing the S element to obtain a raw material mixture
Step s2: a step of heating the raw material mixture to obtain a melt
Step s3: a step of cooling the melt to precipitate a crystal

Another aspect of the method for producing a sulfide electrolyte according to the present embodiment includes the following steps s'1 and s'2 in order, as shown in FIG. 7.

Step s'1: a step of mixing the raw material containing the Li element, the raw material containing the P element, and the raw material containing the S element to obtain a raw material mixture
Step s'2: a step of heating the raw material mixture to obtain a sintered body

The production method including steps s1 to s3 is a melting method, and the production method including steps s'1 and s'2 is a solid-phase synthesis method.

A crystal structure of the sulfide solid electrolyte obtained by the above production method is not particularly limited. Examples of the sulfide solid electrolyte include powders of a sulfide solid electrolyte having a crystal structure containing a Li element, a P element, and an S element, which is referred to as LPS, such as $Li_7P_3S_{11}$, a sulfide solid electrolyte having a crystal structure containing a Li element, a Ge element, a P element, and an S element, which is referred to as LGPS, such as $Li_{10}GeP_2S_{12}$, a sulfide solid electrolyte having an argyrodite crystal structure containing a Li element, a P element, an S element, and a Ha element, a sulfide solid electrolyte made of a Li-P-S-Ha-based crystallized glass, and a sulfide solid electrolyte having a crystal structure containing an Sn element.

The sulfide solid electrolyte may include a crystalline phase and an amorphous phase.

Among these, the argyrodite crystal structure is a crystal structure of a group of compounds derived from a mineral represented by a composition formula $Ag_8GeS_6$. The sulfide solid electrolyte according to the present embodiment is not limited to the above-described crystal structure, and some elements may be substituted with other elements.

When the sulfide solid electrolyte according to the present embodiment has the argyrodite crystal structure, the sulfide solid electrolyte more preferably contains, as the Ha element, at least one element selected from the group consisting of Cl, Br, and I, and still more preferably contains two or more elements.

The sulfide solid electrolyte according to the present embodiment further preferably contains at least one of Cl and Br, and still more preferably contains Cl and Br, as the Ha element.

The argyrodite crystal structure preferably has the above-described structure, and the composition formula is preferably represented by $Li_\alpha PS_\beta Ha_\gamma$ and satisfies relationships of $5 \leq \alpha \leq 7$, $4 \leq \beta \leq 6$, and $1.3 \leq \gamma \leq 2$. Such an element ratio more preferably satisfies relationships of $5.1 < \alpha < 6.3$, $4 < \beta < 5.3$, and $1.4 \leq \gamma \leq 1.9$, and still more preferably satisfies relationships of $5.2 < \alpha < 6.2$, $4.1 < \beta < 5.2$, and $1.5 \leq \gamma \leq 1.8$.

That is, $\alpha$ is preferably 5 or more, more preferably more than 5.1, and still more preferably more than 5.2, and is preferably 7 or less, more preferably less than 6.3, and still more preferably less than 6.2. $\beta$ is preferably 4 or more, more preferably more than 4, and still more preferably more than 4.1, and is preferably 6 or less, more preferably less than 5.3, and still more preferably less than 5.2. $\gamma$ is preferably 1.3 or more, more preferably 1.4 or more, and still more preferably 1.5 or more, and is preferably 2 or less, more preferably 1.9 or less, and still more preferably 1.8 or less.

In the argyrodite crystal structure, a part of the S element and a part of the P element may be substituted with other elements. A part of the S element may be substituted with, for example, a Ha element, an O element, or further with a Se element, a Te element, $BH_4$, CN, or the like. A part of the P element may be substituted with, for example, a Si element, an Al element, a Sn element, an In element, a Cu element, a Sb element, a Ge element, or the like.

In the method for producing a sulfide solid electrolyte according to the present embodiment, in step s1 in the melting method and step s'1 in the solid-phase synthesis method, the composite powder described in [Composite Powder and Production Method Thereof] is used at least as the raw material containing the Li element.

The method for producing a sulfide solid electrolyte using the melting method will be described.

Step s1 is the step of mixing the raw material containing the Li element, the raw material containing the P element, and the raw material containing the S element to obtain the raw material mixture. Depending on a target sulfide solid electrolyte, the raw material mixture further contains a raw material containing a Ha element. In the present specification, the Ha element is at least one element selected from the group consisting of F, Cl, Br, and I.

The raw material may contain another element in accordance with a desired composition of the sulfide solid electrolyte powder. "In accordance with the composition of the sulfide solid electrolyte" means that, for example, when a part of the Li element, P element, S element, and the like is substituted with another element, a raw material containing the substituted other element may also be contained.

Examples of the other element include a Si element, an Al element, a Sn element, an In element, a Cu element, a Sb element, a Ge element, and an O element.

As the raw material containing the Li element, the composite powder containing the lithium halide and elemental sulfur described in the above [Composite Powder and Production Method Thereof] is used.

In addition, another raw material containing the Li element may be further used together with the composite powder. In this case, as the other raw material containing the Li element, a known raw material in the related art can be used.

The composite powder contains elemental sulfur in addition to the lithium halide, but when the composite powder is not used as the raw material containing the S element, the composite powder is heated to volatilize and remove elemental sulfur, and then used as the raw material containing the Li element. The composite powder containing elemental sulfur may be used as the raw material containing the Li element, and elemental sulfur may be volatilized and removed by the heating during or after the synthesis of the sulfide solid electrolyte.

Examples of the other raw material containing the Li element include metallic lithium and a compound containing Li. Examples of the compound containing Li include lithium compounds such as lithium sulfide ($Li_2S$), lithium carbonate ($Li_2CO_3$), lithium sulfate ($Li_2SO_4$), lithium oxide ($Li_2O$), and lithium hydroxide (LiOH). In addition to the above composite powder, a lithium halide may be separately used.

The other raw material containing the Li element is used in combination, lithium sulfide is preferred from the viewpoints of ease of handling and reactivity. On the other hand, since lithium sulfide is expensive, it is preferable to use a lithium compound other than lithium sulfide, metallic lithium, or the like, from the viewpoint of reducing a production cost. Specifically, it is preferable to use one or more selected from the group consisting of metallic lithium, lithium carbonate ($Li_2CO_3$), lithium sulfate ($Li_2SO_4$), lithium oxide ($Li_2O$), and lithium hydroxide (LiOH). These may be used alone or in combination of two or more kinds thereof.

As the raw material containing the P element, a known material in the related art can be used.

Specifically, elemental P or a compound containing P can be used. As a compound serving as both the raw material containing the P element and the raw material containing the S element, phosphorus pentasulfide ($P_2S_5$) or the like may be used.

Examples of the compound containing P among the raw materials containing the P element include phosphorus sulfides such as phosphorus trisulfide ($P_2S_3$) and phosphorus pentasulfide ($P_2S_5$), and a phosphorus compound such as sodium phosphate ($Na_3PO_4$) and lithium thiophosphate ($Li_3PS_{4-x}O_x$).

The raw material containing the P element is preferably phosphorus sulfides, and more preferably phosphorus pentasulfide ($P_2S_5$), from the viewpoint of preventing the inclusion of elements other than the elements constituting the target sulfide solid electrolyte. These may be used alone or in combination of two or more kinds thereof.

When the sulfide solid electrolyte contains an oxygen element, examples of the raw material containing the P element include a compound containing P such as $P_2O_5$, $Li_3PO_4$, and $Li_4P_2O_7$. Among them, $P_2O_5$ is preferred from the viewpoint of ease of production. These compounds may be used alone or in combination of two or more kinds thereof.

As the raw material containing the S element, a known material in the related art can be used. Specifically, elemental sulfur or a compound containing S can be used. On the other hand, since the composite powder according to the present embodiment contains elemental sulfur in addition to the lithium halide, the composite powder may be used as a raw material serving as both the raw material containing the Li element and the raw material containing the S element, or the composite powder and another raw material containing the S element may be used in combination.

Examples of the compound containing S among the other raw material containing the S element include phosphorus sulfides such as phosphorus trisulfide ($P_2S_3$) and phosphorus pentasulfide ($P_2S_5$), other sulfur compounds containing phosphorus, and a compound containing sulfur. Examples of the compound containing sulfur include $H_2S$, $CS_2$, iron sulfides such as FeS, $Fe_2S_3$, $FeS_2$, or $Fe_{1-x}S$, bismuth sulfide ($Bi_2S_3$), and copper sulfides such as CuS, $Cu_2S$, or $Cu_{1-x}S$.

The other raw material containing the S element is preferably phosphorus sulfides, and more preferably phosphorus pentasulfide ($P_2S_5$), from the viewpoint of reactivity and from the viewpoint of preventing the inclusion of elements other than the elements constituting the target sulfide solid electrolyte powder. These may be used alone or in combination of two or more kinds thereof. Phosphorus sulfide is a compound serving as both a substance containing S and a substance containing P.

When the raw material containing the Ha element is contained as an optional component, since the composite powder according to the present embodiment contains the lithium halide, the composite powder may be used as a raw material serving as both the raw material containing the Li element and the raw material containing the Ha element, or the composite powder and the other raw material containing the Ha element may be used in combination.

Here, in the case where the sulfide solid electrolyte according to the present embodiment has the argyrodite crystal structure, the composite powder described in [Composite Powder and Production Method Thereof] is very useful as the raw material serving as both the raw material containing the Li element and the raw material containing the Ha element, or as a raw material serving as the raw material containing the Li element, the raw material containing the Ha element, and the raw material containing the S element.

As the other raw material containing the Ha element, a known material in the related art can be used. Specific examples thereof include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides.

The other raw material containing the Ha element is preferably lithium halides, and more preferably LiCl, LiBr, and LiI, from the viewpoint of preventing the inclusion of elements other than the elements constituting the target sulfide solid electrolyte. These compounds may be used alone or in combination of two or more kinds thereof.

When elements other than Li, S, P, and Ha are also contained as the elements constituting the sulfide solid electrolyte, raw materials containing the other elements are also mixed to obtain a raw material mixture.

Examples of a raw material containing a Si element as an optional component include $SiO_2$ and $SiS_2$. Among them, $SiO_2$ is more preferred from the viewpoint of lithium ion conductivity and water resistance. These compounds may be used alone or in combination of two or more kinds thereof.

Examples of a raw material containing an Al element as an optional component include $Al_2S_3$, $Al_2O_3$, and $AlCl_3$. Among them, $Al_2S_3$ and $AlCl_3$ are preferred, and $Al_2S_3$ is more preferred, from the viewpoint of the lithium ion conductivity. These compounds may be used alone or in combination of two or more kinds thereof.

Examples of a raw material containing a Sn element as an optional component include SnS, $SnS_2$, SnO, $SnO_2$, and $SnCl_2$. Among them, from the viewpoint of lithium ion conductivity, $SnS_2$ and $SnCl_2$ are preferred, and $SnS_2$ is more preferred. These compounds may be used alone or in combination of two or more kinds thereof.

Examples of a raw material containing an In element as an optional component include $In_2O_3$, $In_2S_3$, and $InCl_3$. Among them, from the viewpoint of the lithium ion conductivity, $In_2S_3$ and $InCl_3$ are preferred, and $In_2S_3$ is more preferred. These compounds may be used alone or in combination of two or more kinds thereof.

Examples of a raw material containing a Cu element as an optional component include $Cu_2O$, CuO, $Cu_2S$, CuS, and $CuCl_2$. Among them, from the viewpoint of the lithium ion conductivity, CuS and $CuCl_2$ are preferred, and CuS is more preferred. These compounds may be used alone or in combination of two or more kinds thereof.

Examples of a raw material containing a Sb element as an optional component include $Sb_2O_3$, $Sb_2S_3$, and $SbCl_3$. Among them, from the viewpoint of lithium ion conductivity, $Sb_2S_3$ and $SbCl_3$ are preferred, and $Sb_2S_3$ is more preferred.

These compounds may be used alone or in combination of two or more kinds thereof.

Examples of a raw material containing a Ge element as an optional component include $GeO_2$, $GeS$, $GeS_2$, and $GeCl_2$. Among them, from the viewpoint of the lithium ion conductivity, $GeS_2$ and $GeCl_2$ are preferred, and $GeS_2$ is more preferred. These compounds may be used alone or in combination of two or more kinds thereof.

Examples of a raw material containing a B element as an optional component include $B_2S_3$, $B_2O_3$, and $BCl_3$. Among them, from the viewpoint of lithium ion conductivity, $B_2S_3$ and $BCl_3$ are preferred, and $B_2S_3$ is more preferred. These compounds may be used alone or in combination of two or more kinds thereof.

The raw materials can be mixed by, for example, mixing in a mortar, mixing using a medium such as a planetary ball mill, and medium-less mixing such as a pin mill, a powder stirrer, and air flow mixing.

Step s2 is a step of heating the raw material mixture obtained in step s1 to obtain the melt.

A specific method for heating and melting the raw material mixture in step s2 is not particularly limited, and the raw material is charged into in a heat-resistant container and heated in a heating furnace. The raw material mixture may be sealed in the heat-resistant container. The melting may be performed in an atmosphere containing a sulfur element or the like. Examples of the sulfur element-containing atmosphere include a mixed gas atmosphere of an inert gas and a sulfur element-containing gas such as a sulfur gas, a hydrogen sulfide gas, or a sulfur dioxide gas.

As the heat-resistant container, a heat-resistant container made of carbon, a heat-resistant container containing an oxide such as quartz, a quartz glass, a borosilicate glass, an aluminosilicate glass, alumina, zirconia, and mullite, a heat-resistant container containing a nitride such as silicon nitride and boron nitride, and a heat-resistant container containing a carbide such as silicon carbide may be used. These heat-resistant containers may have a bulk formed of the above-described material, or may be a container having a layer of carbon, an oxide, a nitride, a carbide, or the like, such as a carbon-coated quartz tube.

A heating temperature when the raw material mixture is heated and melted varies depending on the raw materials to be used and the composition of the raw material mixture, but is, for example, preferably 550°C to 1000°C, more preferably 600°C to 950°C, still more preferably 630°C to 900°C, and particularly preferably 650°C to 800°C. Here, the heating temperature is preferably 550°C or higher, more preferably 600°C or higher, still more preferably 630°C or higher, and particularly preferably 650°C or higher, from the viewpoint of increasing a melting property of the raw material and homogenizing the melt in a short time. The heating temperature is preferably 1000°C or lower, more preferably 950°C or lower, still more preferably 900°C or lower, and particularly preferably 800°C or lower, from the viewpoints of preventing deterioration of components caused by heating, preventing a composition deviation caused by volatilization of components, and further preventing decomposition.

A time for the heating and melting varies depending on a scale, but is preferably 10 minutes to 10 hours, more preferably 30 minutes to 9.5 hours, still more preferably 45 minutes to 9 hours, and particularly preferably 1 hour to 9 hours. Here, the time for the heating and melting is preferably 10 minutes or more, more preferably 30 minutes or more, still more preferably 45 minutes or more, and particularly preferably 1 hour or more, from the viewpoint of allowing the reaction to proceed smoothly. From the viewpoint of productivity, the time for the heating and melting is preferably 10 hours or less, more preferably 9.5 hours or less, and still more preferably 9 hours or less.

A pressure during the heating and melting is not particularly limited, but for example, a normal pressure or a slight pressure is preferred, and normal pressure is more preferred.

A dew point during the heating and melting is preferably -20°C or lower, and a lower limit thereof is not particularly limited, but is usually about -80°C. An oxygen concentration is preferably 1000 ppm by volume or less.

In step s2, whether the melt is completely dissolved can be checked by the absence of a peak derived from a crystal in high-temperature X-ray diffraction measurement.

The subsequent step s3 is a step of cooling the melt obtained in step s2 to precipitate the crystal. The crystal obtained by the precipitation is the sulfide solid electrolyte.

The cooling may be performed by a known method, and the method is not particularly limited. Examples of a more specific cooling method include a method in which the melt is poured onto a plate-like body made of carbon or the like and then cooled, a method in which the melt is poured into a narrow gap to be formed into a thin shape, such as a twin roll process, and a gas atomizing method.

A cooling rate is preferably 0.1°C/sec to 10000°C/sec, more preferably 0.5°C/sec to 5000°C/sec, and still more preferably 1°C/sec to 1000°C/sec. The cooling rate is preferably 0.1°C/sec or more, more preferably 0.5°C/sec or more, and still more preferably 1°C/sec or more, from the viewpoint of increasing composition homogeneity and preventing variation in quality. An upper limit value of the cooling rate is not particularly limited, and the upper limit value is 1000000°C/sec or less in consideration of the cooling rate of a twin roller, which is generally said to have the highest rapid cooling rate, and from the viewpoint of actual production, the cooling rate is more preferably 10000°C/sec or less, still more preferably 5000°C/sec or less, and even more preferably 1000°C/sec or less.

An atmosphere during the cooling is preferably an inert atmosphere with a low moisture content, similar to that in the heating and melting in step s2.

The method for producing a sulfide solid electrolyte including steps s1 to s3 may further include a pulverizing step and a heat-treating step, if desired.

In the pulverizing step, either wet pulverization or dry pulverization may be used. When an atomizing method capable of simultaneously cooling and powdering is adopted as the cooling method in step s3, step s3 also serves as the pulverizing step.

In the pulverizing step, an average particle diameter of the sulfide solid electrolyte is preferably 1 $\mu$m to 100 $\mu$m. Here, the average particle diameter refers to a median diameter (D50) determined from a volume-based particle size distribution chart obtained by measuring a particle size distribution using a particle size distribution meter using a laser diffraction method, which means a particle diameter at which 50 vol% of particles has a particle diameter equal to or less than the value.

The heat-treating step aims to enhance homogeneity and stabilize a quality of the sulfide solid electrolyte.

When the obtained sulfide solid electrolyte is heat-treated, a heating temperature varies depending on the composition of the sulfide solid electrolyte, and is, for example, preferably 200°C to 600°C, more preferably 350°C to 500°C, still more preferably 380°C to 460°C, and particularly preferably 400°C to 450°C. Here, from the viewpoint of the homogenization of the sulfide solid electrolyte and the stabilization of the quality, the heating temperature is preferably 200°C or higher, more preferably 350°C or higher, still more preferably 380°C or higher, and particularly preferably 400°C or higher. From the viewpoint of preventing sintering of the particles, the temperature is preferably 600°C or lower, more preferably 500°C or lower, still more preferably 460°C or lower, and particularly preferably 450°C or lower.

When excessive elemental sulfur derived from the composite powder remains in the obtained sulfide solid electrolyte, excessive elemental sulfur can also be removed by the heat treatment at a temperature higher than the boiling point of elemental sulfur. Elemental sulfur is removed by this heat treatment, and the S element constituting the crystal structure of the sulfide solid electrolyte is not removed.

When the sulfide solid electrolyte is heat-treated, a heating time varies depending on the composition of the sulfide solid electrolyte, and is, for example, preferably 10 minutes to 10 hours, more preferably 30 minutes to 9.5 hours, still more preferably 45 minutes to 9 hours, and particularly preferably 1 hour to 9 hours. Here, from the viewpoint of the homogenization of the sulfide solid electrolyte and the stabilization of the quality, the time for the heat treatment is preferably 10 minutes or more, more preferably 30 minutes or more, still more preferably 45 minutes or more, and particularly preferably 1 hour or more. From the viewpoint of the production cost, the time for the heat treatment is preferably 10 hours or less, more preferably 9.5 hours or less, and still more preferably 9 hours or less.

When the sulfide solid electrolyte is heat-treated, an atmosphere other than a $SO_2$ concentration during the heat treatment is preferably an inert atmosphere. Examples of the inert atmosphere include a nitrogen gas atmosphere, an argon gas atmosphere, and a helium gas atmosphere.

A dew point during the heat treatment is preferably -20°C or lower, and a lower limit thereof is not particularly limited, and is generally about -80°C. An oxygen concentration is preferably 1000 ppm by volume or less.

A method for producing a sulfide solid electrolyte using the solid-phase synthesis method will be described.

Step s'1 is the step of mixing the raw material containing the Li element, the raw material containing the P element, and the raw material containing the S element to obtain the raw material mixture.

The raw materials in step s'1 are the same as the raw materials in step s1 in the melting method described above, including preferred aspects.

For the mixing in step s'1, a known method in the related art can be adopted, but mixing performed by mechanical milling is preferable. In the case of using the mechanical milling method using a ball mill, examples thereof include a rotary ball mill that provides rotation movement to a container, a vibrating ball mill that provides vibrational movement, a planetary ball mill that provides revolution and rotation movement, a bead mill, and Attritor (registered trademark). Among them, a planetary ball mill or a bead mill having a higher mixing force or pulverizing force is preferable.

The ball mill may be dry mixing or wet mixing using a dispersion medium, and dry mixing is preferable from the viewpoint of efficiently transmitting energy.

The raw materials are mixed by the mixing to form the raw material mixture. The raw material mixture is a precursor of the sulfide solid electrolyte. The precursor may be a homogeneous amorphous intermediate compound that has been amorphized by employing mixing conditions that are severer than mixing conditions in the related art. The amorphous intermediate compound means that an XRD peak derived from the raw material is not observed.

Step s'2 is the step of heating the raw material mixture to obtain the sintered body. The sintered body obtained by crystallization caused by heating is the sulfide solid electrolyte.

A heating temperature of the raw material mixture varies depending on the composition of the target sulfide solid electrolyte, but is preferably 350°C to 600°C, more preferably 400°C to 575°C, and still more preferably 450°C to 550°C. Here, from the viewpoint of promoting the crystallization, the heating temperature is preferably 350°C or higher, more preferably 400°C or higher, and still more preferably 450°C or higher. From the viewpoint of preventing thermal decomposition, the heating temperature is preferably 600°C or lower, more preferably 575°C or lower, and still more preferably 550°C or lower.

The solid-phase synthesis method is usually performed in a closed system instead of an open system. In the case of the closed system, the above temperature range can be adopted even when elemental sulfur contained in the composite powder according to the present embodiment is desired to be used as the raw material containing the S element constituting the sulfide solid electrolyte. This is because, even if elemental sulfur is vaporized by the heating, the vaporized elemental sulfur remains in the system, so that elemental sulfur may become the S element constituting the crystal structure of the sulfide solid electrolyte.

When elemental sulfur contained in the composite powder is not used as the raw material containing the S element constituting the sulfide solid electrolyte, elemental sulfur can be removed by heat-treating the sulfide solid electrolyte at the temperature equal to or higher than the boiling point of elemental sulfur after the sulfide solid electrolyte is obtained.

A time for the heat treatment when the raw material mixture is heat-treated and crystallized to obtain the sulfide solid electrolyte varies depending on the composition of the target sulfide solid electrolyte, but is, for example, preferably 1 hour to 100 hours, more preferably 2 hours to 50 hours, and still more preferably 4 hours to 24 hours. Here, from the viewpoint of promoting the crystallization, the time for the heat treatment is preferably 1 hour or more, more preferably 2 hours or more, and still more preferably 4 hours or more. From the viewpoint of the production cost, the time for the heat treatment is preferably 100 hours or less, more preferably 50 hours or less, and still more preferably 24 hours or less.

When the raw material mixture is heat-treated and crystallized to obtain the sulfide solid electrolyte, the atmosphere during the heat treatment is preferably the inert atmosphere. Examples of the inert atmosphere include a nitrogen gas atmosphere, an argon gas atmosphere, and a helium gas atmosphere.

A dew point during the heat treatment is preferably -20°C or lower, and a lower limit thereof is not particularly limited, and is generally about -80°C. An oxygen concentration is preferably 1000 ppm by volume or less.

The method for producing a sulfide solid electrolyte including steps s'1 and s'2 may further include a pulverizing step and a heat-treating step, if desired.

In this case, each of the pulverizing step and the heat-treating step is the same as the pulverizing step and the heat-treating step which may be included in the method for producing a sulfide solid electrolyte including steps s1 to s3, and preferred aspects thereof are also the same.

EXAMPLES

Hereinafter, the present invention is described in detail with reference to Examples, but the present invention is not limited thereto.

Examples 1-1 to 1-4 and Examples 2-1 to 2-4 are inventive examples, and Example 1-5 is a comparative example.

[Example 1-1]

To 300.0 g of water, 75.0 g of lithium carbonate was added, and reacted with 342.2 g of 48% by mass hydrobromic acid to prepare a 26.2% by mass lithium bromide aqueous solution.

To 672.5 g of the obtained 26.2% by mass lithium bromide aqueous solution, 1.0 g of elemental sulfur (colloidal sulfur) was added to create a state in which elemental sulfur is present. After the addition of elemental sulfur, dispersibility of elemental sulfur was increased by applying an ultrasonic homogenizer for 1 minute.

In such a state, 672.5 g of 26.2% by mass lithium bromide aqueous solution was placed in a vibration drying apparatus, and a pressure was set to 2 kPa and a temperature of a jacket surrounding a container was set to 160°C to remove a solvent. The jacket temperature was raised from room temperature to 160°C over 100 hours, and after being held at 160°C for 24 hours, the temperature was lowered to room temperature. As described above, the solvent was removed, and a dried powder was obtained.

It is found by Raman spectroscopy that the obtained powder contains elemental sulfur in addition to lithium bromide. Five samples of 0.1 g were taken from the obtained powder, and contents A1 to A5 of elemental sulfur in the composite powder were determined by the high-frequency furnace combustion-infrared absorbing method. An arithmetic mean value Aave. of A1 to A5 represented by the following formula was obtained.

[Math. 3]

$$\text{Aave.} = (A1 + A2 + A3 + A4 + A5) / 5$$

A variation (%) was obtained by the following formula using A1 to A5 and Aave. obtained by the above formula. A value of the obtained Aave. is shown as "elemental sulfur content" and the variation is shown as "homogeneity and variation" in Table 1, and it is found that the obtained powder is a composite powder having high homogeneity.

[Math. 4]

$$\text{Variation (\%)} = \frac{\{\sqrt{(A1-Aave.)^2}+\sqrt{(A2-Aave.)^2}+\sqrt{(A3-Aave.)^2}+\sqrt{(A4-Aave.)^2}+\sqrt{(A5-Aave.)^2}\}/5}{Aave.} \times 100$$

[Example 1-2]

To 300.0 g of water, 75.0 g of lithium carbonate was added, and reacted with 342.2 g of 48% by mass hydrobromic acid to prepare a 26.2% by mass lithium bromide aqueous solution.

To 672.5g of the obtained 26.2% by mass lithium bromide aqueous solution, 15 g of a 5% by mass sulfurous acid aqueous solution was added to obtain a 26.2% by mass lithium bromide aqueous solution containing sulfite ions.

When 1.1 g of lithium sulfide was added to 672.5 g of the obtained 26.2% by mass lithium bromide aqueous solution containing sulfite ions, a solution became cloudy and was in a state in which elemental sulfur was present. This is considered to be due to reduction of $SO_3^{2-}$ by $Li_2S$ to produce S. Next, dispersibility of elemental sulfur was increased by applying an ultrasonic homogenizer for 1 minute.

In such a state, 672.5 g of the 26.2% by mass lithium bromide aqueous solution was placed in a vibration drying apparatus, and dried in the same manner as in Example 1-1 to obtain a dried powder from which a solvent was removed.

It is found by Raman spectroscopy that the obtained powder contains elemental sulfur in addition to lithium bromide. In the same manner as in Example 1-1, elemental sulfur was quantified with respect to the composite powder by the high-frequency furnace combustion-infrared absorbing method, and a variation was found. The results are shown in Table 1, and it is found that the obtained powder is a composite powder having high homogeneity.

[Example 1-3]

To 300.0 g of water, 75.0 g of lithium carbonate was added, and reacted with 342.2 g of 48% by mass hydrobromic acid to prepare a 26.2% by mass lithium bromide aqueous solution.

To 672.5g of the obtained 26.2% by mass lithium bromide aqueous solution, 15 g of a 5% by mass sulfurous acid aqueous solution was added to obtain a 26.2% by mass lithium bromide aqueous solution containing sulfite ions.

When a hydrogen sulfide gas was bubbled into 672.5 g of the obtained 26.2% by mass lithium bromide aqueous solution containing sulfite ions at a flow rate of 0.1 SLM for 10 minutes, a solution became cloudy and was in a state in which elemental sulfur was present. This is considered to be due to reduction of $SO_3^{2-}$ by $H_2S$ to produce S. Next, dispersibility of elemental sulfur was increased by applying an ultrasonic homogenizer for 1 minute.

In such a state, 672.5 g of the 26.2% by mass lithium bromide aqueous solution was placed in a vibration drying apparatus, and dried in the same manner as in Example 1-1 to obtain a dried powder from which a solvent was removed.

It is found by Raman spectroscopy that the obtained powder contains elemental sulfur in addition to lithium bromide. In the same manner as in Example 1-1, elemental sulfur was quantified with respect to the composite powder by the high-frequency furnace combustion-infrared absorbing method, and a variation was found. The results are shown in Table 1, and it is found that the obtained powder is a composite powder having high homogeneity.

[Example 1-4]

To 300.0 g of water, 75.0 g of lithium carbonate containing a sulfurous acid component was added, and reacted with 342.2 g of 48% by mass hydrobromic acid to prepare a 26.2% by mass lithium bromide aqueous solution containing sulfite ions. Lithium carbonate containing the sulfurous acid component was obtained by adding 15 g of a 5% by mass sulfurous acid aqueous solution to 75.0 g of lithium carbonate.

When a hydrogen sulfide gas was bubbled into 672.5 g of the obtained 26.2% by mass lithium bromide aqueous solution containing sulfite ions at a flow rate of 0.1 SLM for 10 minutes, a solution became cloudy and was in a state in which elemental sulfur was present. This is considered to be due to reduction of $SO_3^{2-}$ by $H_2S$ to produce S. Next, dispersibility of elemental sulfur was increased by applying an ultrasonic homogenizer for 1 minute.

In such a state, 672.5 g of the 26.2% by mass lithium bromide aqueous solution was placed in a vibration drying apparatus, and dried in the same manner as in Example 1-1 to obtain a dried powder from which a solvent was removed.

It is found by Raman spectroscopy that the obtained powder contains elemental sulfur in addition to lithium bromide. In the same manner as in Example 1-1, elemental sulfur was quantified with respect to the composite powder by the high-frequency furnace combustion-infrared absorbing method, and a variation was found. The results are shown in Table 1, and it is found that the obtained powder is a composite powder having high homogeneity.

[Example 1-5]

To 300.0 g of water, 75.0 g of lithium carbonate was added, and reacted with 342.2 g of 48% by mass hydrobromic acid to prepare a 26.2% by mass lithium bromide aqueous solution.

In a vibration drying apparatus was placed 672.5 g of the obtained 26.2% by mass lithium bromide aqueous solution, and dried in the same manner as in Example 1-1 to obtain a dried powder from which a solvent was removed.

The obtained powder was found to be a lithium bromide powder containing no elemental sulfur by Raman spectroscopy. Since the obtained powder did not contain elemental sulfur, a variation relating to homogeneity was not evaluated.

[Evaluation: Bumping Prevention]

For each of Examples 1-1 to 1-5, the obtained powder was collected from the vibration drying apparatus, and a contamination status inside the apparatus was checked. Specifically, a contamination status of the inside of the apparatus by solids containing the lithium halide due to scattering caused by bumping of the lithium halide aqueous solution was checked at the following three locations. (1) Exhaust port filter for pressure reduction (2) thermocouple for temperature measurement (3) movable outlet portion for discharging obtained powder

The results are shown in "Filter", "Thermocouple", and "Outlet" in Table 1, and evaluation criteria thereof are as follows.

(1) Filter

A: There is little or no adhesion to the exhaust port filter, and the pressure inside the apparatus can be reduced
B: The exhaust port filter is clogged with the adhesion, making it difficult to reduce the pressure inside the apparatus

(2) Thermocouple

A: There is little or no adhesion to the thermocouple, and accurate temperature measurement is possible
B: There is a lot of adhesion to the thermocouple, which makes the accurate temperature measurement impossible

(3) Outlet

A: There is little or no adhesion to the movable outlet portion, and the outlet can be opened and closed
B: There is a lot of adhesion to the movable outlet portion, which prevents the outlet from opening and closing

As an overall evaluation, when all of the above (1) to (3) were A, it is rated as good: A, and when one or more of the above (1) to (3) is B, it is rated as bad: B, since it is necessary to clean the inside of the apparatus and it is not possible to continuously produce the composite powder.

[Evaluation: Ignitability Evaluation]

The composite powders containing LiBr and S obtained in Examples 1-1 to 1-4 were brought close to a fire to evaluate ignitability. As a result, it is found that none of the composite powders is ignited.

[Table 1]

| | Powder | Elemental sulfur content (Aave.) | Evaluation | | | | |
|---|---|---|---|---|---|---|---|
| | | | Homogeneity | Bumping prevention | | | |
| | | | Variation | Filter | Thermocouple | Outlet | Overall evaluation |
| Example 1-1 | Composite powder containing LiBr and S | 0.56% by mass | 10% | A | A | A | A |
| Example 1-2 | Composite powder containing LiBr and S | 1.15% by mass | 11% | A | A | A | A |
| Example 1-3 | Composite powder containing LiBr and S | 1.10% by mass | 8% | A | A | A | A |
| Example 1-4 | Composite powder containing LiBr and S | 1.08% by mass | 10% | A | A | A | A |
| Example 1-5 | Powder containing LiBr | - | - | B | B | B | B |

[Examples 2-1 to 2-4]

Each of the composite powders in Examples 1-1 to 1-4 obtained above is further pulverized in an agate mortar to obtain a powder having an average particle diameter of 200 $\mu$m or less. Each of the composite powders, a lithium sulfide powder (manufactured by Sigma), a phosphorus pentasulfide powder (manufactured by Sigma), a lithium chloride powder (manufactured by Sigma), and a lithium bromide powder (manufactured by Sigma) were mixed in a mortar in predetermined amounts so as to have a composition ratio of $Li_{5.3}PS_{4.2}Cl_{0.8}Br_{0.8}$, thereby obtaining a raw material mixture.

The raw material mixtures were heated at 700°C for 1 hour to obtain melts, and then cooled at 1000°C/min to obtain sulfide solid electrolytes in Examples 2-1 to 2-4.

Powder X-ray diffraction measurement was performed on each of the obtained sulfide solid electrolytes, and as a result of Rietveld analysis, it is found that each has an argyrodite crystal structure having a composition of $Li_{5.3}PS_{4.2}Cl_{0.8}Br_{0.8}$.

From the above results, it is found that the bumping can be prevented by heating the lithium halide aqueous solution in the presence of elemental sulfur. Therefore, it is shown that an excessive temperature equal to or higher than the boiling point can be used for removing the solvent from the lithium halide aqueous solution, and as a result, a lithium halide powder can be obtained in a short period of time with high productivity.

In addition, by preventing the bumping, the contamination of the inside of the apparatus is prevented, and continuous production of lithium halide using the same apparatus is possible, which also can be said that the productivity is high.

It is found that the composite powder obtained by the production method according to the present embodiment does not ignite even when brought close to a fire, and is preferably able to prevent the dust explosion, unlike the case of elemental sulfur.

Furthermore, as shown in Examples 2-1 to 2-4, the composite powder obtained by the production method according to the present embodiment is used as the raw material to obtain the sulfide solid electrolyte. In Examples 2-1 to 2-4, since the melt was obtained at 700°C, which is higher than the boiling point of elemental sulfur, the composite powder was used as the raw material serving as both the raw material containing the Li element and the raw material containing the halogen element.

On the other hand, by obtaining the melt at a temperature equal to or lower than the boiling point of elemental sulfur, the composite powder may be used as a material that also serves as a raw material containing an S element. Further, by using the composite powder obtained by the production method according to the present embodiment as the raw material and obtaining the sulfide solid electrolyte by the solid-phase synthesis method in the closed system, the composite powder may be used as the material also serving as the raw material containing the S element.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2022-212574) filed on December 28, 2022, the content of which is incorporated herein by reference.

**Claims**

1.  A method for producing a composite powder comprising a lithium halide and elemental sulfur which is to be used in a raw material for a sulfide solid electrolyte, the method comprising:
    heating a lithium halide aqueous solution at a temperature equal to or higher than a boiling point in the presence of elemental sulfur, and removing a solvent.

2.  The method for producing a composite powder according to claim 1, wherein an elemental sulfur powder is added to the lithium halide aqueous solution to create a state in which elemental sulfur is present.

3.  The method for producing a composite powder according to claim 1, wherein the lithium halide aqueous solution is a lithium halide aqueous solution comprising $SO_3^{2-}$, and
    an alkali metal sulfide is added to the lithium halide aqueous solution to create a state in which elemental sulfur is present.

4.  The method for producing a composite powder according to claim 1, wherein the lithium halide aqueous solution is a lithium halide aqueous solution comprising $SO_3^{2-}$, and
    hydrogen sulfide is introduced to the lithium halide aqueous solution to create a state in which elemental sulfur is present.

5.  The method for producing a composite powder according to claim 3 or 4, the method comprising:
    obtaining the lithium halide aqueous solution comprising $SO_3^{2-}$ from at least one of lithium carbonate and lithium hydroxide, wherein the at least one of lithium carbonate and lithium hydroxide comprises $SO_3^{2-}$.

6.  The method for producing a composite powder according to any one of claims 2 to 4, wherein the lithium halide aqueous solution comprises an aqueous solution of lithium bromide.

7.  A method for producing a sulfide solid electrolyte, the method comprising:

    mixing a raw material comprising a Li element, a raw material comprising a P element, and a raw material comprising an S element to obtain a raw material mixture;
    heating the raw material mixture to obtain a melt; and
    cooling the melt to precipitate a crystal,
    wherein the composite powder obtained by the production method according to any one of claims 1 to 4 is used at least as the raw material containing the Li element.

8.  A method for producing a sulfide solid electrolyte, the method comprising:

    mixing a raw material comprising a Li element, a raw material comprising a P element, and a raw material comprising an S element to obtain a raw material mixture; and
    heating the raw material mixture to obtain a sintered body,
    wherein the composite powder obtained by the production method according to any one of claims 1 to 4 is used at least as the raw material containing the Li element.

9.  A composite powder comprising a lithium halide and elemental sulfur which is to be used as a raw material for a sulfide solid electrolyte.

10.  The composite powder according to claim 9, wherein a variation of elemental sulfur in the composite powder is 15% or less.

11.  The composite powder according to claim 9 or 10, wherein the lithium halide comprises lithium bromide.

FIG. 1

| LITHIUM HALIDE AQUEOUS SOLUTION |
| --- |

··· S1: HEAT (IN PRESENCE OF ELEMENTAL SULFUR)

| COMPOSITE POWDER |
| --- |

FIG. 2

| LITHIUM HALIDE AQUEOUS SOLUTION |
| --- |

··· S1a: ELEMENTAL SULFUR POWDER
HEAT

| COMPOSITE POWDER |
| --- |

FIG. 3

| LITHIUM HALIDE aq. CONTAINING $SO_3^{2-}$ |
| --- |

··· S1b: ALKALI METAL SULFIDE
HEAT

| COMPOSITE POWDER |
| --- |

FIG. 4

| LITHIUM HALIDE aq. CONTAINING $SO_3^{2-}$ |
| --- |

··· S1c: HYDROGEN SULFIDE
HEAT

| COMPOSITE POWDER |
| --- |

## FIG. 5

Li$_2$CO$_3$/LiOH CONTAINING SO$_3^{2-}$

↓ ··· S0: HYDROHALIC ACID

LITHIUM HALIDE aq. CONTAINING SO$_3^{2-}$

## FIG. 6

RAW MATERIALS

↓ · · · s1: MIX

RAW MATERIAL MIXTURE

↓ · · · s2: HEAT AND MELT

MELT

↓ · · · s3: COOL

SULFIDE SOLID ELECTROLYTE

## FIG. 7

RAW MATERIALS

↓ · · · s'1: MIX

RAW MATERIAL MIXTURE

↓ · · · s'2: HEAT-TREAT

SULFIDE SOLID ELECTROLYTE

## INTERNATIONAL SEARCH REPORT

| International application No. |
|---|
| **PCT/JP2023/046403** |

| A. | CLASSIFICATION OF SUBJECT MATTER |
|---|---|

*H01B 13/00*(2006.01)i; *C01B 25/14*(2006.01)i; *C01D 15/04*(2006.01)i; *H01M 10/0562*(2010.01)i
FI: H01B13/00 Z; C01D15/04; C01B25/14; H01M10/0562

According to International Patent Classification (IPC) or to both national classification and IPC

| B. | FIELDS SEARCHED |
|---|---|

Minimum documentation searched (classification system followed by classification symbols)

H01B13/00; C01B25/14; C01D15/04; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-118030 A (MITSUBISHI GAS CHEMICAL COMPANY, INC.) 10 August 2021 (2021-08-10) paragraphs [0017]-[0138] | 9-11 |
| A | paragraphs [0017]-[0138] | 1-8 |
| A | JP 2018-80095 A (TOYOTA JIDOSHA KABUSHIKI KAISHA) 24 May 2018 (2018-05-24) paragraphs [0036]-[0047], fig. 1 | 1-8 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 March 2024** | **19 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

### INTERNATIONAL SEARCH REPORT
**Information on patent family members**

International application No.

**PCT/JP2023/046403**

| Patent document cited in search report | | | Publication date (day/month/year) | Patent family member(s) | Publication date (day/month/year) |
|---|---|---|---|---|---|
| JP | 2021-118030 | A | 10 August 2021 | (Family: none) | |
| JP | 2018-80095 | A | 24 May 2018 | US 2018/0145311 A1 paragraphs [0023]-[0090], fig. 1 CN 108075183 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013256416 A
- JP 2014065637 A
- JP 2014065638 A
- JP 2020027715 A
- JP 2022212574 A